(19) Europäisches Patentamt

European Patent Office

Office européen des brevets

(11) **EP 0 834 650 B1**

(12) **FASCICULE DE BREVET EUROPEEN**

(45) Date de publication et mention
de la délivrance du brevet:
**05.03.2003 Bulletin 2003/10**

(51) Int Cl.[7]: **F02D 41/38**, F02D 35/02,
F02D 41/40

(21) Numéro de dépôt: **97402236.0**

(22) Date de dépôt: **25.09.1997**

(54) **Procédé de contrôle de la quantité de carburant injecté dans un moteur diesel**

Verfahren zur Steuerung der Kraftstoffeinspritzmenge für einen Dieselmotor

Method of control of the injected fuel quantity in a Diesel engine

(84) Etats contractants désignés:
**DE ES GB IT NL SE**

(30) Priorité: **27.09.1996 FR 9611985**

(43) Date de publication de la demande:
**08.04.1998 Bulletin 1998/15**

(73) Titulaire: **INSTITUT FRANCAIS DU PETROLE**
**92852 Rueil-Malmaison Cedex (FR)**

(72) Inventeur: **Gatellier, Bertrand**
**92100 Boulogne (FR)**

(56) Documents cités:
**EP-A- 0 539 921**       **EP-A- 0 647 774**
**FR-A- 2 704 023**       **US-A- 4 513 714**
**US-A- 5 070 836**       **US-A- 5 229 945**

**Description**

La présente invention concerne le domaine des moteurs diesel et plus particulièrement celui du contrôle de l'injection dans ce type de moteurs.

Il est connu d'associer à un moteur un ou plusieurs capteurs pour mesurer plusieurs paramètres de façon à mieux contrôler son fonctionnement. Il peut s'agir de capteurs de pression permettant de mesurer la pression à l'intérieur des chambres et à l'extérieur, de capteurs de température, de capteurs de levée d'aiguille d'injecteurs etc.

Il est connu également d'appliquer au moyen d'un calculateur, des réglages prédéfinis à un moteur en rapportant les indications des capteurs à des configurations-types mémorisées. Ces configuration-type sont appelées "cartographies" par les spécialistes. Pour que ce procédé soit efficace, il faut mettre en oeuvre de nombreux capteurs et "cartographier" des tables complexes de configurations-types rapportées à des conditions de fonctionnement très variées.

Par ailleurs l'injection de carburant est une opération décisive dans le cycle de fonctionnement des moteurs. C'est pourquoi de nombreuses recherches ont porté sur l'amélioration de l'injection via notamment un contrôle plus performant.

Le contrôle de l'injection devient une opération particulièrement délicate lorsque de fortes pressions, parfois supérieures à 1200 bar, sont nécessaires à l'injection dans les cylindres. Les injecteurs les plus récemment développés fonctionnent à de telles pressions, par exemple dans les moteurs diesel à injection directe.

Dans ces conditions, il devient difficile d'assurer un bon contrôle de la quantité de carburant injecté. Il est notamment difficile d'assurer une bonne répartition du carburant dans chacun des cylindres. Cette répartition conditionne non seulement la consommation totale de carburant, la qualité de la combustion donc la pollution engendrée, mais aussi l'agrément de conduite.

Les méthodes connues permettant d'améliorer la répartition de l'injection cylindre à cylindre sont basées sur une correction du couple-moteur via l'analyse de la vitesse instantanée de rotation du vilebrequin prise dans chaque cylindre. Le document Toyota SAE 930 873 décrit une telle méthode.

Le problème est encore plus aigü lorsqu'il s'agit de contrôler de faibles quantités de carburant comme par exemple les petites injections de carburant ayant lieu avant l'injection principale dans les moteurs diesel à injection directe. Ces pré-injections sont encore appelées "injections-pilote" par les spécialistes et seront ainsi dénommées dans la suite de ce texte.

Ces petites injections permettent d'améliorer le bruit de combustion des émissions de polluants.

Le document FR 2 704 023 décrit une façon de contrôler ce type d'injection à partir d'injections-pilote quasi-nulles jusqu'à obtention de valeurs détectables de la pré-injection.

Selon l'invention, le contrôle de l'injection peut donc être opéré via le contrôle de l'injection-pilote et/ou de l'injection principale dans l'un au moins des cylindres du moteur, en temps réel, et d'une façon différente et avantageuse.

En d'autres termes, l'invention a pour objet de contrôler la quantité de carburant injecté dans un moteur diesel.

Les principales étapes de l'invention peuvent consister à :

(a) - déterminer la variation de la pression à l'intérieur d'au moins un cylindre autour d'un instant spécifique du cycle-moteur, pour deux cycles successifs ayant des caractéristiques d'injection différentes, l'un des cycles comportant deux phases d'injection successives et l'autre des cycles comportant une seule phase d'injection;

(b) - déterminer à partir de la variation de la pression, la quantité de carburant réellement injectée ;

(c) - en déduire l'écart entre la quantité de carburant réellement injectée dans ledit cylindre et une quantité de carburant théorique;

(d) - ajuster les paramètres d'injection de façon à égaliser en temps réel la quantité de carburant réellement injectée à la quantité de carburant devant être théoriquement injectée.

Conformément à l'invention, le procédé est préférentiellement mis en oeuvre lors d'un fonctionnement stabilisé du moteur.

Le procédé selon l'invention peut être mis en oeuvre indépendamment pour chaque cylindre du moteur.

Selon l'un des modes de réalisation de l'invention, le procédé est mis en oeuvre pour un cylindre et l'on ajuste les autres cylindres de la même façon.

Plus précisément, on détermine la valeur absolue de la variation de la pression entre un cycle ayant une pré-injection de carburant avant l'injection principale et un cycle ayant uniquement une injection principale de carburant.

Avantageusement, on ajuste la quantité de carburant pré-injectée.

Préférentiellement, un calculateur est utilisé pour mettre en oeuvre le procédé, ledit calculateur permettant un ajustement en temps réel de la quantité de carburant injecté.

Selon l'un des aspects de l'invention, l'étape (b) est réalisée grâce à des données mémorisées dans ledit calculateur.

En outre, conformément à l'invention, l'étape (c) est réalisée grâce à des données mémorisées dans ledit calculateur en mettant en oeuvre éventuellement un processus d'auto-adaptation de la correction.

Selon l'invention, on peut aussi ajuster la quantité de carburant principalement injecté. Ceci peut être réalisé grâce à une relation mémorisée dans le calculateur entre l'ajustement de la quantité pré-injectée et celui de la quantité principalement injectée.

De façon avantageuse, on détermine ladite variation de pression autour du point mort haut de la combustion.

Selon un exemple de réalisation de l'invention, le procédé peut être mis en oeuvre avec un système d'injection dit "common rail" ; un système d'injection comprenant un injecteur-pompe par cylindre peut aussi être utilisé.

Le procédé selon l'invention nécessite en outre la définition d'instants particuliers du cycle tels que par exemple l'instant $\beta$ de commande du début de l'injection principale ; l'instant $\alpha_o$ qui doit préférentiellement être compris dans une plage donnée.

En outre, si la variation de pression ($\Delta P$) est nulle, on modifie le signal ($T_1$) relatif à la quantité de carburant pré-injecté.

La présente invention prévoit par ailleurs de modifier le signal relatif à la quantité de carburant principalement injecté, qui suit un ajustement des paramètres d'injection. Ainsi, le signal modifié est fonction du signal relatif à la quantité de carburant pré-injecté, du signal lié à la quantité de commande principalement injecté et de la pression d'injection.

Une application préférée de l'invention concerne les moteurs diesel à injection directe.

D'autres caractéristiques, avantages, détails de l'invention apparaîtront plus clairement à la lecture de la description qui va suivre, faite à titre illustratif et nullement limitatif en référence aux dessins annexés sur lesquelles :

- La figure 1 concerne des courbes donnant les pressions-cylindre pour des cycles ayant des caractéristiques d'injection différentes, autour d'un instant donné du cycle-moteur;

- La figure 2 est une courbe définissant la relation entre la variation de pression selon la figure 1 et la quantité-pilote de carburant injecté ;

- la figure 3 illustre un exemple de signaux de commande du système d'injection, tels que délivrés par le calculateur, selon l'invention;

- la figure 4 illustre les quantités injectées avec les signaux de commande de la figure 3; et

- Les figures 5A et 5B montrent des signaux de commande pour deux cas de fonctionnement différents.

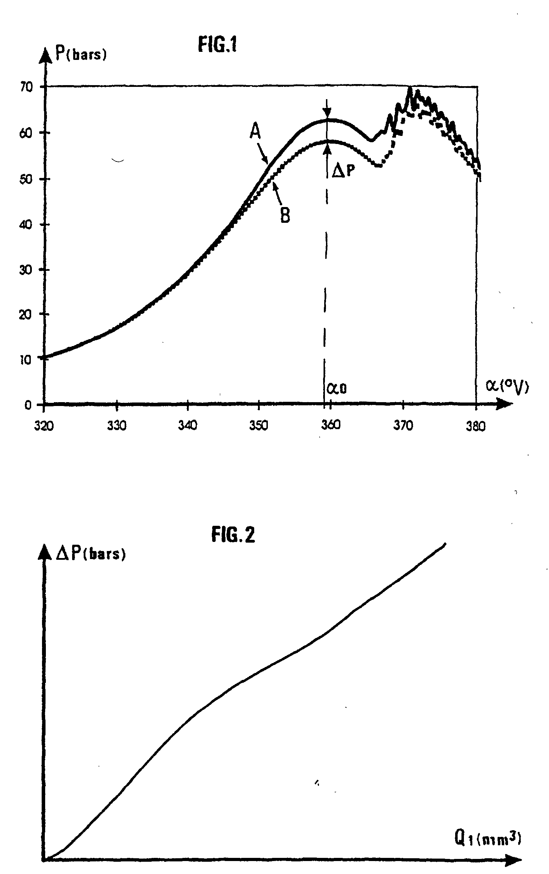

La figure 1 montre des courbes expérimentales donnant une relation entre la pression-cylindre et l'angle vilebrequin. Les courbes A et B sont relatives à des caractéristiques d'injection différentes. En effet, la courbe A concerne la pression dans un cylindre où a lieu une injection-pilote avant l'injection principale tandis que la courbe B illustre la pression dans un cylindre sans injection-pilote. On remarque une variation de pression $\Delta P$ entre les deux courbes, variation qui est maximale ici autour de 360°C vilebrequin pour le point mort haut combustion. Autour de ce point caractéristique ($\alpha_o$) il y a une bonne répétabilité de la variation de la pression pour chaque type d'injection ; on exploite donc avantageusement les courbes A et B pour déterminer notamment la variation de la pression $\Delta P$ autour d'un angle vilebrequin donné ($\alpha_o$).

Cette donnée est ensuite utilisée comme donnée d'entrée d'une courbe telle que représentée sur la figure 2. Cette courbe, quasi linéaire, établit la relation entre la variation de pression $\Delta P$ telle que définie plus haut et la quantité $Q_1$ de carburant injectée en pilote, pour un régime et une charge donnés. Connaissant $\Delta P$ on déduit d'après cette courbe la quantité $Q_1$ de carburant injecté.

Sur la figure 2 une seule courbe est représentée mais en réalité un faisceau de courbes, qui correspondent chacune à un régime et une charge donnés peuvent être exploitées.

Les courbes de la figure 2 sont des abaques mémorisés dans un calculateur associé ; celui-ci va permettre, comme expliqué ci-après, de contrôler en permanence et de calculer en temps réel la quantité de carburant injecté en pilote et/ou la quantité totale de carburant injecté dans au moins un cylindre du moteur.

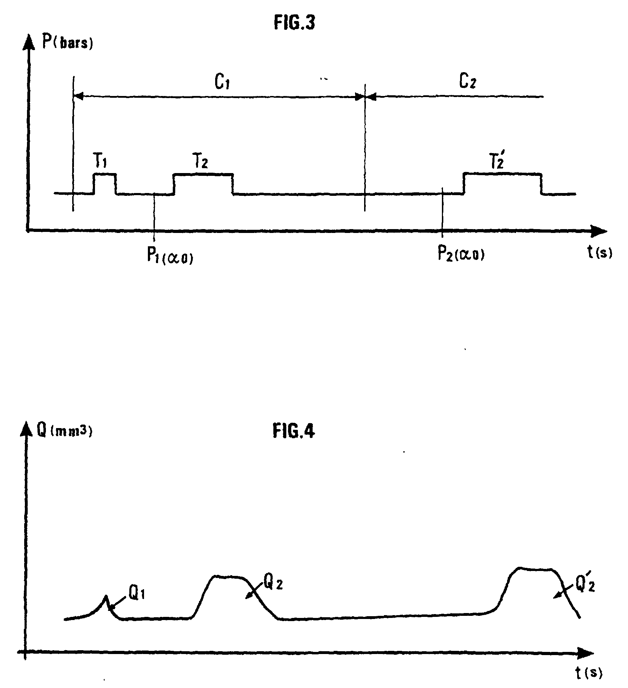

Les figures 3 et 4 illustrent la mise en oeuvre d'un mode de réalisation de l'invention dans le cas d'un système d'injection dit "common rail".

La figure 3 montre le signal de commande délivré par le calculateur et obtenu pour deux cycles de combustion successifs C1 et C2 dans un cylindre. Ce signal représente le temps de commande à un instant prédéterminé du cycle, pour un cylindre donné. Le cycle $C_1$ comporte une commande d'une injection-pilote qui est activée par le créneau $T_1$, suivie d'une commande de l'injection principale correspondant au créneau $T_2$. Une pression $P_1$ fonction de $\alpha_o = P_1(\alpha_o)$ peut être associée à ce cycle. Le cycle $C_2$ ne comprend pas d'injection-pilote ; seul un créneau $T_2$ du signal apparaît donc. Une pression $P_2 (\alpha_o)$ correspondante est mesurée. On remarque que selon ce mode de réalisation de l'invention, un capteur de pression est donc nécessaire pour chaque cylindre.

Ainsi la différence de pression $\Delta P = P_2(\alpha_o) - P_1(\alpha_o)$ peut être quantifiée et le procédé selon l'invention peut être mis en oeuvre pour obtenir la quantité de carburant injecté : $Q_1$ telle que représentée sur la figure 4.

On peut ainsi déterminer pour chaque cylindre (i) la relation qui existe entre $T^i_1$ et $Q^i_1$.

Il est alors possible de corriger pour un cycle ultérieur $T_1^i$ afin d'ajuster la quantité $Q^i_1$ de carburant

injecté pendant l'injection pilote sur le cylindre (i).

En outre, on peut se servir de cette information obtenue pour le cylindre i, pour corriger $T_2^i$ qui est la quantité principale de carburant à injecter dans ce cylindre.

En effet :

$$\begin{cases} T_1' = T_1(base) + \delta\ T_1^i \\ T_2' = T_2(base) + \delta\ T_2^i \end{cases}$$

Les valeurs $T_1$(base) et $T_2$(base) sont mémorisées dans le calculateur, sous forme de cartographies en fonction de la charge et/ou la position de la pédale et du régime-moteur.

En outre on détermine au préalable par tout moyen connu en soi la fonction reliant $\delta T_2^i$ à $\delta T_1^i$ ; cette fonction est, elle aussi, préprogrammée dans le calculateur

$$\delta T_2^i = f(\delta T_1^i)$$

La présente invention permet donc non seulement de corriger le temps de commande $T_1^i$ par un calcul quasi instantané en temps réel mais également le temps de commande $T_2^i$, pour un cylindre (i) donné.

On peut ajuster les quantités de commande réellement injectées aux quantités préprogrammées.

Le mode de réalisation de l'invention qui vient d'être décrit nécessite de disposer d'un capteur de pression par cylindre de manière à pouvoir ajuster la quantité injectée pour chaque cylindre individuellement, en mettant en oeuvre le procédé de façon séparée dans chaque cylindre.

L'avantage de cette solution réside dans la précision et la fiabilité de l'ajustement qui tient compte notamment de l'usure et/ou de l'encrassement propre à chaque injecteur.

Sans sortir du cadre de la présente invention on peut disposer d'un seul capteur de pression et réaliser le même ajustement en considérant que les différents cylindres et injecteurs sont identiques et fonctionnent de ce fait de façon tout à fait semblable.

Comme on l'a vu plus haut, le système d'injection peut être un système dit de "common rail" où la pression d'injection est commune à tous les cylindres.

Cependant, sans sortir du cadre de l'invention, le système d'injection peut présenter un injecteur-pompe par cylindre. Les signaux sont alors traités comme indiqué ci-dessus.

Un élément caractéristique de l'invention concerne le début (ou phasage) de l'injection principale de carburant. Cet instant est l'instant de commande du signal $T_2$ (ou $T_2'$).

Par ailleurs, un autre élément important pour la mise en oeuvre du procédé selon l'invention concerne le choix de l'angle vilebrequin $\alpha_o$ auquel les pressions $P_1$ et $P_2$ sont mesurées. L'exemple de la figure 1 a été réalisé pour $\alpha_o = 360°$, point mort haut de la combustion. Plus généralement $\alpha_o$ doit être choisi avant tout dégagement d'énergie dû à l'injection principale et après la fin du dégagement d'énergie lié à l'injecteur pilote. Il doit être choisi à un instant du cycle où le répétabilité des courbes de pressions $P_1$ et $P_2$ est bonne.

Au cas où l'écart $\Delta P$ entre les pressions $P_1$ et $P_2$ est inférieur à un seuil ($\Sigma$), par exemple parce que $T_1$ n'est pas assez important, alors on augmente le signal de commande de l'injection-pilote par palliers successifs jusqu'à obtenir un écart de pression $\Delta P$ supérieur au seuil ($\Sigma$) afin de pouvoir mettre en oeuvre le procédé décrit ci-dessus.

Ainsi qu'il vient d'être décrit, le procédé selon l'invention peut être mis en oeuvre alors qu'il existe au moins un cycle ayant une injection pilote suivie d'une injection principale. Cette succession peut être associée au fonctionnement normal du moteur. La figure 5A illustre les signaux correspondant de commande de l'injection. Dans ce cas de figure, on doit donc créer, conformément à l'invention, un cycle (C2) ayant uniquement une injection principale, entre deux cycles (C1, C3) correspondant au fonctionnement normal.

Afin que cette modification n'entraine pas une variation de travail trop importante entre deux cycles, on va chercher par exemple à égaliser les quantités injectées. A cette fin, le signal $T_2$ relatif à l'injection principale unique va être modifié en $T_2'$.

La modification peut avantageusement être préprogrammée dans le calculateur sous la forme d'une fonction préprogrammée $T_2' = f(T_1, T_2, P_{inj})$. Donc selon les signaux $T_1$ et $T_2$ ainsi que la pression d'injection Pinj, une valeur particulière est affectée à $T_2'$.

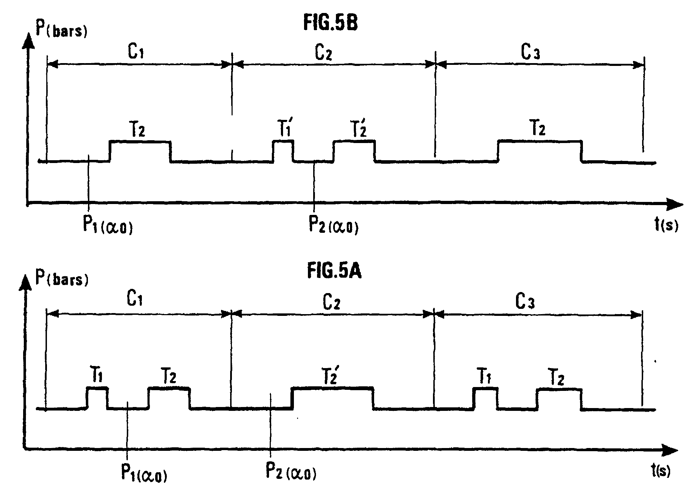

A l'inverse, le fonctionnement normal peut ne pas prévoir d'injection pilote comme illustré sur la fig. 5B où un cycle normal comprend essentiellement une unique injection (principale) de carburant. L'introduction d'un cycle avec injection pilote peut alors faire varier le travail fourni à chaque cycle. Afin de minimiser cette variation de travail et d'obtenir un bon agrément de conduite, le signal $T_2'$ est appliqué dans le cycle modifié (C2). Le signal $T_2'$ peut être une valeur préprogrammée comme indiqué ci-dessus $T_2' = f(T_1, T_2, P_{inj})$.

Il doit toutefois être souligné que dans ce cas de figure, le fait que le fonctionnement normal ne prévoit pas d'injection-pilote ne signifie pas pour autant que le signal de commande $T_1$ correspondant à l'injection-pilote soit nul comme sur la figure 5B. Le signal $T_1$ peut exister mais il est alors tel qu'il n'entraine pas une injection-pilote.

On cherchera généralement à égaliser les quantités injectées entres les deux cycles ayant des caractéristiques d'injection différentes, de façon à avoir $Q_1 + Q_2 = k$ constante.

Enoncé de façon plus générale, l'invention nécessitant dans tous les cas une modification du fonctionnement normal, ladite modification est préprogrammée dans le calculateur dans le but de diminuer la variation du travail résultant de la modification du fonctionnement normal.

**Revendications**

1.  Procédé de contrôle de la quantité de carburant injecté dans un moteur diesel comprenant au moins un cylindre, **caractérisé en ce qu'**il consiste à :

    (a) - déterminer la variation de la pression ($\Delta P$) à l'intérieur d'au moins un cylindre autour d'un instant spécifique ($\alpha_o$) du cycle-moteur, pour deux cycles successifs ($C_1$, $C_2$) ayant des caractéristiques d'injections différentes, l'un des cycles comportant deux phases d'injection successives et l'autre des cycles comportant une seule phase d'injection;

    (b) déterminer à partir de la variation de la pression ($\Delta P$), la quantité de carburant réellement injectée ;

    (c) - en déduire l'écart entre la quantité de carburant réellement injectée dans ledit cylindre et une quantité de carburant théorique;

    (d) - ajuster les paramètres d'injection de façon à égaliser en temps réel la quantité de carburant réellement injectée à la quantité de carburant devant être théoriquement injectée.

2.  Procédé selon la revendication 1, **caractérisé en ce qu'**il est mis en oeuvre lors d'un fonctionnement stabilisé du moteur.

3.  Procédé selon la revendication 1 ou 2, **caractérisé en ce qu'**il est mis en oeuvre indépendamment pour chaque cylindre du moteur.

4.  Procédé selon l'une quelconque des revendications 1 ou 2, **caractérisé en ce qu'**il est mis en oeuvre pour un cylindre et **en ce que** l'on ajuste les autres cylindres de la même façon.

5.  Procédé selon l'une quelconque des revendications précédentes, **caractérisé en ce que** l'on détermine la valeur absolue de la variation de la pression ($\Delta P$) entre un cycle ($C_1$) ayant une pré-injection de carburant avant l'injection principale et un cycle ($C_2$) ayant uniquement une injection principale de carburant.

6.  Procédé selon la revendication 5, **caractérisé en ce que** l'on ajuste la quantité ($Q_1$) de carburant pré-injectée.

7.  Procédé selon l'une quelconque des revendications précédentes, **caractérisé en ce qu'**un calculateur est utilisé pour mettre en oeuvre le procédé, ledit calculateur permettant un ajustement en temps réel de la quantité de carburant injecté.

8.  Procédé selon la revendication 7, **caractérisé en ce que** l'étape (b) est réalisée grâce à des données mémorisées dans ledit calculateur.

9.  Procédé selon l'une des revendications 7 ou 8, **caractérisé en ce que** l'étape (c) est réalisée grâce à des données mémorisées dans ledit calculateur.

10. Procédé selon la revendication 9, **caractérisé en ce que** l'étape (c) est mise en oeuvre grâce à un processus d'auto-adaptation de l'ajustement.

11. Procédé selon la revendication 6, **caractérisé en ce qu'**on ajuste en outre la quantité de carburant principalement injectée ($Q_2$).

12. Procédé selon la revendication 6, **caractérisée en ce que** l'on ajuste la quantité principale grâce à une relation mémorisée dans le calculateur entre l'ajustement de la quantité pré-injectée ($Q_1$) et celui de la quantité principalement injectée ($Q_2$).

13. Procédé selon l'une quelconque des revendications précédentes, **caractérisé en ce que** l'on détermine ladite variation de pression ($\Delta P$) autour du point mort haut de la combustion.

14. Procédé selon l'une quelconque des revendications précédentes, **caractérisé en ce qu'**il est mis en oeuvre avec un système d'injection spécifique.

15. Procédé selon la revendication 14, **caractérisé en ce que** le système d'injection utilisé est dit "common rail".

16. Procédé selon la revendication 14, **caractérisé en ce que** le système d'injection utilisé présente un injecteur-pompe par cylindre.

17. procédé selon l'une quelconque des revendications précédentes, **caractérisé en ce que** l'on définit un instant caractéristique ($\beta$) de commande du début de l'injection principale.

18. Procédé selon la revendication 1, **caractérisé en ce que** l'instant spécifique ($\alpha_o$) est choisi dans une plage située entre la fin de l'injection-pilote et le début de l'injection principale qui suit.

19. Procédé selon l'une quelconque des revendications précédentes, **caractérisé en ce que** lorsque la valeur absolue de la variation de pression ($\Delta P$) est nulle ou quasi-nulle, on modifie le signal ($T_1$) relatif à la quantité de carburant pré-injecté.

20. Procédé selon l'une quelconque des revendications précédentes, **caractérisé en ce que** l'on modifie le signal $T_2$ relatif à la quantité de carburant principalement injecté, qui suit un ajustement des paramètres d'injection.

21. Procédé selon la revendication 20, **caractérisé en ce que** le signal modifié $T'_2$ est fonction du signal $T_1$ relatif à la quantité de carburant pré-injectée, du signal $T_2$ lié à la quantité de carburant principalement injectée, et de la pression d'injection.

22. Application du procédé selon l'une quelconque des revendications précédentes à un moteur diesel à injection directe.

**Claims**

1. Method for control of the quantity of fuel injected into a diesel engine including at least one cylinder, **characterised by** the fact that it consists of:

   (a) - determining the variation in the pressure ($\Delta P$) inside at least one cylinder around a specific moment ($\alpha_o$) in the engine cycle, for two successive cycles ($C_1$, $C_2$) having different injection characteristics, one of the cycles including two successive injection phases and the other of the cycles including one single injection phase;

   (b) - determining the quantity of fuel actually injected from the variation in pressure ($\Delta P$);

   (c) - deducing from it the difference between the quantity of fuel actually injected into the said cylinder and a theoretical quantity of fuel;

   (d) - adjusting the injection parameters so as to equalise in real time the quantity of fuel actually injected with the quantity of fuel having theoretically to be injected.

2. Method as described in claim 1, **characterised by** the fact that it is implemented upon stabilised operation of the engine.

3. Method as described in claim 1 or 2, **characterised by** the fact that it is implemented independently for each cylinder of the engine.

4. Method as described in any one of claims 1 or 2,

**characterised by** the fact that it is implemented for one cylinder and by the fact that the other cylinders are adjusted in the same manner.

5. Method as described in any one of the preceding claims, **characterised by** the fact that the absolute value is determined of the variation in pressure ($\Delta P$) between a cycle ($C_1$) having a pre-injection of fuel before the main injection and a cycle ($C_2$) having only a main injection of fuel.

6. Method as described in claim 5, **characterised by** the fact that the quantity ($Q_1$) of fuel pre-injected is adjusted.

7. Method as described in any one of the preceding claims, **characterised by** the fact that a computer is used to implement the method, the said computer allowing adjustment in real time of the quantity of fuel injected.

8. Method as described in claim 7, **characterised by** the fact that step (b) is performed using data stored in the said computer.

9. Method as described in one of claims 7 or 8, **characterised by** the fact that step (c) is performed using data stored in the said computer.

10. Method as described in claim 9, **characterised by** the fact that step (c) is performed by means of a process of auto-adaptation of adjustment.

11. Method as described in claim 6, **characterised by** the fact that the main quantity of fuel injected (Q2) is also adjusted.

12. Method as described in claim 6, **characterised by** the fact that the main quantity is adjusted by means of a relationship stored in the computer between the adjustment of the quantity pre-injected ($Q_1$) and that of the main quantity injected ($Q_2$).

13. Method as described in any one of the preceding claims, **characterised by** the fact that the said variation in pressure ($\Delta P$) is determined around top dead centre of combustion.

14. Method as described in any one of the preceding claims, **characterised by** the fact that it is implemented with a specific injection system.

15. Method as described in claim 14, **characterised by** the fact that the injection system used is known as "common rail".

16. Method as described in claim 14, **characterised by** the fact that the injection system used has one injector-pump per cylinder.

**17.** Method as described in any one of the preceding claims, *characterised by the fact that* a characteristic moment ($\beta$) of instruction of the start of the main injection is defined.

**18.** Method as described in claim 1, *characterised by the fact that* the specific moment ($\alpha_0$) is selected within a range situated between the end of the pilot injection and the start of the main injection which follows.

**19.** Method as described in any one of the preceding claims, *characterised by the fact that* when the absolute value of the variation in pressure ($\Delta P$) is zero or virtually zero, the signal ($T_1$) relating to the quantity of fuel pre-injected is modified.

**20.** Method as described in any one of the preceding claims, *characterised by the fact that* the signal $T_2$ is modified relating to the main quantity of fuel injected, which follows adjustment of the injection parameters.

**21.** Method as described in claim 20, *characterised by the fact that* the modified signal $T_2$ is a function of the signal $T_1$ relating to the quantity of fuel pre-injected, of the signal $T_2$ linked to the main quantity of fuel injected, and of the injection pressure.

**22.** Application of the method as described in any one of the preceding claims to a direct injection diesel engine.

**Patentansprüche**

**1.** Verfahren zur Regelung der in einen Dieselmotor, welcher wenigstens einen Zylinder umfasst, eingespritzten Treibstoffmenge, **dadurch gekennzeichnet, dass** es darin besteht:

(a) die Variation des Drucks ($\Delta P$) in wenigstens einem Zylinder, um einen spezifischen Moment ($\alpha_0$) des Motorzyklussees herum für zwei aufeinanderfolgende Zyklen ($C_1$, $C_2$) mit unterschiedlichen Einspritzcharakteristika zu bestimmen, wobei der eine der Zyklen zwei aufeinanderfolgende Einspritzphasen umfasst und der andere der Zyklen eine einzige Einspritzphase umfasst;

(b) ausgehend von der Variation des Drucks ($\Delta P$) die real eingespritzte Treibstoffmenge zu bestimmen;

(c) daraus die Abweichung zwischen der real in den Zylinder eingespritzten Treibstoffmenge und der theoretischen Treibstoffmenge zu schließen;

(d) die Einspritzparameter derart einzustellen, dass in Realzeit die real eingespritzte Treibstoffmenge der Treibstoffmenge angeglichen wird, welche theoretisch eingespritzt werden muss.

**2.** Verfahren nach Anspruch 1, **dadurch gekennzeichnet, dass** es bei einem stabilisierten Betrieb des Motors durchgeführt wird.

**3.** Verfahren nach Anspruch 1 oder 2, **dadurch gekennzeichnet, dass** es unabhängig für jeden Zylinder des Motors durchgeführt wird.

**4.** Verfahren nach einem der Ansprüche 1 oder 2, **dadurch gekennzeichnet, dass** es für einen Zylinder durchgeführt wird und dadurch, dass man die anderen Zylinder in gleicher Weise einstellt.

**5.** Verfahren nach einem der vorhergehenden Ansprüche, **dadurch gekennzeichnet, dass** man den Absolutwert der Variation des Drucks ($\Delta P$) zwischen einem Zyklus ($C_1$) mit einer Voreinspritzung von Treibstoff vor der Haupteinspritzung und einem Zyklus ($C_2$) mit lediglich einer Treibstoffhaupteinspritzung bestimmt.

**6.** Verfahren nach Anspruch 5, **dadurch gekennzeichnet, dass** man die voreingespritzte Treibstoffmenge ($Q_1$) einstellt.

**7.** Verfahren nach einem der vorhergehenden Ansprüche, **dadurch gekennzeichnet, dass** ein Rechner verwendet wird, um das Verfahren durchzuführen, wobei der Rechner eine Einstellung der eingespritzten Treibstoffmenge in Realzeit ermöglicht.

**8.** Verfahren nach Anspruch 7, **dadurch gekennzeichnet, dass** die Stufe (b) dank der von dem Rechner gespeicherten Daten durchgeführt wird.

**9.** Verfahren nach einem der Ansprüche 7 oder 8, **dadurch gekennzeichnet, dass** die Stufe (c) dank der in dem Rechner gespeicherten Daten durchgeführt wird.

**10.** Verfahren nach Anspruch 9, **dadurch gekennzeichnet, dass** die Stufe (c) dank eines Selbstadaptionsvorgangs der Einstellung durchgeführt wird.

**11.** Verfahren nach Anspruch 6, **dadurch gekennzeichnet, dass** man im übrigen die hauptsächlich eingespritzte Treibstoffmenge ($Q_2$) einstellt.

**12.** Verfahren nach Anspruch 6, **dadurch gekennzeichnet, dass** man die Hauptmenge dank einer in dem Rechner gespeicherten Beziehung zwischen der Einstellung der voreingespritzten Menge ($Q_1$) und jener der hauptsächlich eingespritzten Menge ($Q_2$) einstellt.

**13.** Verfahren nach einem der vorhergehenden Ansprüche, **dadurch gekennzeichnet, dass** man die Druckvariation ($\Delta P$) um den oberen Totpunkt der Verbrennung herum bestimmt.

**14.** Verfahren nach einem der vorhergehenden Ansprüche, **dadurch gekennzeichnet, dass** es mit einem spezifischen Einspritzsystem durchgeführt wird.

**15.** Verfahren nach Anspruch 14, **dadurch gekennzeichnet, dass** das verwendete Einspritzsystem ein sogenanntes "common rail" ist.

**16.** Verfahren nach Anspruch 14, **dadurch gekennzeichnet, dass** das verwendete Einspritzsystem eine Einspritzpumpe pro Zylinder aufweist.

**17.** Verfahren nach einem der vorhergehenden Ansprüche, **dadurch gekennzeichnet, dass** man einen charakteristischen Steuerungsmoment ($\beta$) des Anfangs der Haupteinspritzung definiert.

**18.** Verfahren nach Anspruch 1, **dadurch gekennzeichnet, dass** der spezifische Moment ($\alpha_0$) in einem Bereich gewählt wird, welcher zwischen dem Ende der Piloteinspritzung und dem Anfang der Haupteinspritzung, welche folgt, liegt.

**19.** Verfahren nach einem der vorhergehenden Ansprüche, **dadurch gekennzeichnet, dass**, wenn der Absolutwert der Druckvariation ($\Delta P$) null oder quasi null ist, das Signal ($T_1$) relativ zur voreingespritzten Treibstoffmenge modifiziert wird.

**20.** Verfahren nach einem der vorhergehenden Ansprüche, **dadurch gekennzeichnet, dass** man das Signal $T_2$ relativ zur hauptsächlich eingespritzten Treibstoffmenge modifiziert, welche einer Einstellung der Einspritzparameter folgt.

**21.** Verfahren nach Anspruch 20, **dadurch gekennzeichnet, dass** das modifizierte Signal $T'_2$ abhängig vom Signal $T_1$ relativ zur voreingespritzten Treibstoffmenge, vom Signal $T_2$, das mit der hauptsächlich eingespritzten Treibstoffmenge verbunden ist, und vom Einspritzdruck ist.

**22.** Verwendung eines Verfahrens nach einem der vorhergehenden Ansprüche bei einem Dieselmotor mit Direkteinspritzung.

**EP 0 834 650 B1**

**FIG.1**

P(bars) ... α(°V)

**FIG.2**

ΔP(bars) ... Q₁(nm³)

9

## FIG.3

P(bars)

$C_1$    ..    $C_2$

$T_1$    $T_2$    $T_2'$

$P_{1(\alpha 0)}$    $P_{2(\alpha 0)}$    t(s)

## FIG.4

Q (mm3)

$Q_1$    $Q_2$    $Q_2'$

t(s)

FIG.5B

FIG.5A